# EUROPEAN PATENT SPECIFICATION

(11) **EP 0 426 643 B1**
(45) Date of publication and mention of the grant of the patent: **27.12.1995**
(21) Application number: 90870205.3
(22) Date of filing: 30.10.1990
(51) Int. Cl.: C07F 17/00

(54) **Process for the preparation of metallocenes**
Verfahren zur Herstellung von Metallocenen
Procédé de préparation de métallocènes

(30) Priority: 30.10.1989 EP 89870164
(43) Date of publication of application: 08.05.1991
(73) Proprietor: FINA RESEARCH S.A., B-7181 Feluy (BE)
(72) Inventor: Razavi, Abbas, B-7260 Paturages (BE)

(56) References cited:
- EP-A- 0 284 707
- JOURNAL OF THE AMERICAN CHEMICAL SOCIETY, vol. 77, no. 13, July 1955, pages 3604-3606, Washington, DC, US; L. SUMMERS et al.: "Diaryl bis- (cyclopentadienyl)-titanium compounds"

## Description

The present invention relates to the preparation of metallocene compounds. More particularly, the present invention relates to a new process for the reaction of metal cations with cyclopentadienyl-type anions to form metallocenes.

Metallocenes are being increasingly used as catalysts for the polymerization of olefins. Ewen and Razavi have recently disclosed that metallocene catalysts can be tailored to control the stereospecificity of polypropylene (JACS, 110, 6255-6, 1988). However, such control may be largely dependent on the purity of the catalysts.

Generally, the preparation of metallocene compounds consists of forming and isolating the cyclopentadienyl or substituted cyclopentadienyl ligand(s), which are reacted with a halogenated or alkylated transition metal compound to form a complex which is then purified.

European Patent Application n°89870079.4 (EP-A-351392) discloses two methods for the preparation of metallocenes.

In method A, n-butyllithium is added to a solution of the ligand in tetrahydrofuran (THF), after which metal chloride in THF is added with vigorous stirring. After refluxing, removal of the solvent leaves a mixture of LiCl and a red solid. However, this method gives metallocenes which are extremely air- and moisture-sensitive, and which are in addition somewhat impure so that they generally have to be purified by either pentane extraction, fractional recrystallisation, or chromatography. The final complex nevertheless contains some THF, coordinated to the metal.

In method B, methylene chloride is used as a non-coordinating solvent. The reaction product of n-butyllithium with the ligand is isolated and dissolved in methylene chloride at -78°C; a slurry of metal chloride in methylene chloride at the same temperature is added, and the mixture is allowed to warm slowly to room temperature before filtering off LiCl. However, this method gives a solution of an impure metallocene in methylene chloride, which must be recrystallized and washed. Further, this method requires the use of very low temperatures.

J. Am. Chem. Soc., vol. 77, no. 13 pages 3604-3606 (see in particular page 3605, column 1, line 31 to column 2, line 10), discloses a process for the preparation of a metallocene, comprising the steps of
(i) reacting (a) titanium tetrachloride and (b) a slurry of the solid reaction product of the ligand cyclopentadiene with butyllithium in a non-polar hydrocarbon liquid (xylene) at the reflux temperature of xylene; and
(ii) recovering a solid mixture of lithium salt and titanocene.

There is thus a need in the art for a method for preparing metallocene compounds that would not have the above drawbacks.

It is an object of this invention to provide a process for the preparation of metallocenes having a sufficient purity for subsequent use as catalysts for the polymerization of olefins, without need for further purification.

Another object of the invention is to provide a process for the preparation of metallocenes that would not require working at very low temperatures.

Still another object of the invention is to provide a process for the preparation of metallocenes with a high yield.

Accordingly, the process of the invention for the preparation of metallocenes comprises the steps of
(i) reacting in a non-polar hydrocarbon liquid at a temperature from -20°C to +100°C
   (a) a transition metal salt and (b) powder of the solid reaction product of the ligand with an alkyllithium in a non-polar hydrocarbon liquid; and
(ii) recovering a solid mixture of lithium salt and metallocene.

The process of the invention is applicable to a large variety of metallocene syntheses. As examples of ligands, there may be cited cyclopentadiene, substituted cyclopentadienes, and bridged dicyclopentadienes wherein each cyclopentadiene may be equal or different and may be substituted or not. Substituted cyclopentadienes may have either one substituent or several substituents which may be the same or different. As substituents, there may be cited hydrocarbyl radicals having from 1 to 20 carbon. Exemplary hydrocarbyl radicals include methyl, ethyl, propyl, isopropyl, butyl, isobutyl, amyl, isoamyl, hexyl, heptyl, octyl, nonyl, decyl, cetyl, phenyl, and the like. Other hydrocarbyl radicals useful in the present catalysts include other alkyl, aryl, alkenyl, alkylaryl or arylalkyl radicals. Further, substituents comprise hydrocarbyl radicals attached to a single carbon atom in the cyclopentadiene ring as well as radicals that are bonded to two carbon atoms in the ring.

The ligand may be prepared using various processes known in the art, depending on the selection of the specific ring substituents and bridge, if any.

The reaction of the ligand with an alkyllithium is known in the art; it is generally carried out by dropwise addition of an alkyllithium solution in a solution of the ligand. Methyl lithium and n-butyllithium are most often used, as are stoechiometric ratios of the reactants. The solid reaction product may be recovered by complete evaporation of the solvent. Depending on the evaporation conditions, said product may have to be reduced to a fine powder, e.g. by grinding in a mortar.

As transition metal salt, there is generally used a halide derivative. If said salt is solid, it should preferally be under the form of a fine powder, else the solid should be finely powdered, e.g. by grinding in a mortar.

When the catalyst is to be used for the polymerization of olefins, the metal is usually selected from Groups 4, 5 or 6 (formely known as groups IVb, Vb and VIb) and more particularly selected from the group consisting of Ti, Zr, Hf, V and Cr. Although other transition metals could be contemplated for that or for other end-uses.

As examples of non-polar hydrocarbon liquids, there may be cited the alkanes in C₃ to C₁₂. Preferred liquids are the alkanes in C₄ to C₆, the most preferred being pentane because of its ease of removal. Indeed, although higher alkanes like decane could be used as non-polar hydrocarbon liquid, their complete removal in the next step would require washing with a lighter liquid alkane like pentane.

While this procedure is entirely new in the field of metallocene preparation, where those skilled in the art would use as reaction medium a liquid reacting with the lithiated ligand, the applicant has found that the reaction between the powders proceeds relatively quickly to completion even though at least the lithiated ligand powder is substantially insoluble in the non-polar hydrocarbon liquid. This is even surprising when the transition metal salt is also substantially insoluble in the said liquid, because one skilled in the art would believe that the reaction would not proceed.

The temperature of the mixture during the reaction step can be adjusted within a very wide range, at least between -20°C and +100°C, preferally between 0 and 60°C, room temperature (about 25°C) being most preferred for obvious reasons. As one of ordinary skill in the art knows, lowering the temperature will require a longer reaction time, while increasing the temperature may allow to shorten the reaction time. As a general approach, overnight stirring of the mixture at room temperature gives a substantially total reaction. Slight heating of the mixture (e.g. refluxing of a pentane suspension) may allow to reduce the reaction time down to a few hours.

The reaction pressure is usually atmospheric, although operation with liquid butene or propane may require higher pressures.

As everyone knows, dry (moisture-free) and oxygen-free conditions are required for this type of reaction and for the storage of the metallocenes.

After completion of the reaction step, a solid mixture of lithium salt and metallocene may be recovered, usually by decantation or filtration, and washed with fresh non-polar hydrocarbon liquid, preferably with an easily removed alkane like pentane.

Yields attainable with the process of the invention are very high, typically above 90%. As comparison, it may be indicated that methods previously known using methylene chlorde only give yields of the order of 40%.

The metallocene obtained is very pure, except for the presence of a lithium salt, and generally does not require a purification step. If required, selective extraction of the metallocene may be used. When metallocenes are used as catalysts for the polymerization of olefins, the presence of small amounts of a pure lithium salt like LiCl does not appear to have any significant effect on the activity of the catalyst.

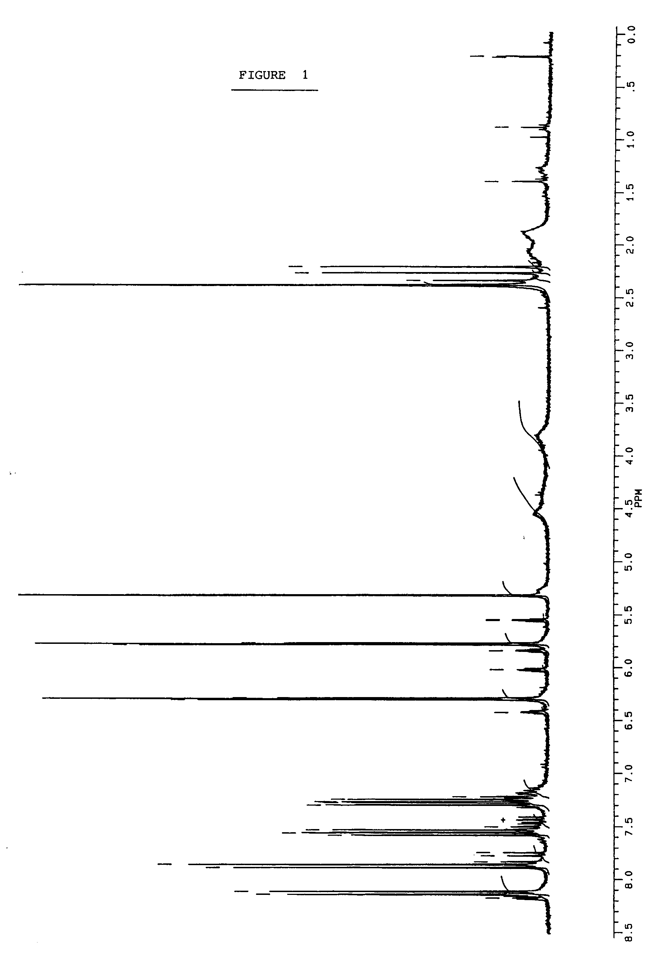

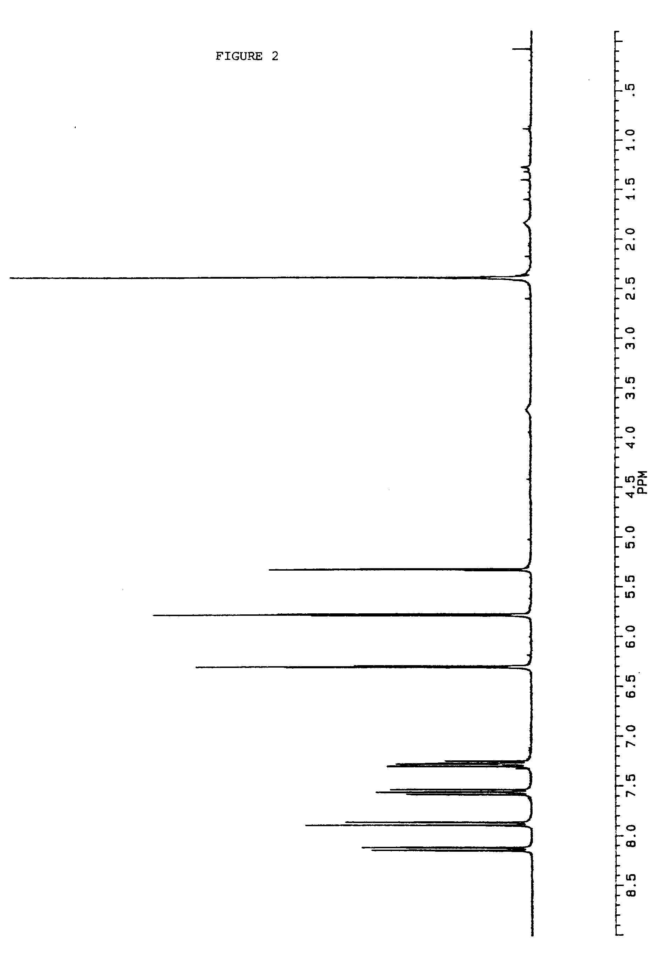

The invention will now be described further by means of the following examples which should not be construed as limiting the invention in any way, and by means of Figures 1 and 2 :
- Figure 1 represents the ¹³C-NMR spectrum of a metallocene prepared by the process of the invention;
- Figure 2 represents the ¹³C-NMR spectrum of a metallocene obtained by a conventional process;
- Figure 3 represents the differential scanning colorimetry of the syndiotactic polypropylene obtained with a metallocene catalyst prepared by the process of the invention. The heat flow (expressed in mW) is represented as a function of the temperature (expressed in °C).
- Figure 4 represents the ¹³C-NMR spectrum of syndiotactic polypropylene obtained with a metallocene prepared by the process of the invention.

### Example 1

### a. Preparation of a ligand

41.5 grams (0.25 mol) of fluorene were dissolved in 350 ml of tetrahydrofuran (THF) in a 500 ml round bottom flask equipped with a side arm and dropping funnel with pressure equaliser.

0.25 mol of methyllithium (CH₃Li) were added dropwise as a 1.6 M solution in ether. Stirring of the orange-red solution was continued for three hours.

After gas evolution had ceased, 100 ml of THF containing 26.5 g (0.25 mol) of 6,6-dimethylfulvene was added dropwise to the solution. Stirring of the red solution was continued overnight.

The resulting solution was then washed with 200 ml of a saturated ammonium chloride aqueous solution, then with water.

After evaporation of the solvents, a yellow powder was recovered on the surface of the water. Recrystallization by dissolving the yellow powder in 500 ml chloroform and addition of excess methanol at 2°C yielded a white powder of 2,2-isopropenyl fluorene cyclopentadiene.

### b. Reaction of the ligand with alkyllithium

10 g (0.0368 mol) of the ligand were dissolved in 200 ml THF in a 500 ml round bottom flask equipped with a side dropping funnel.

0.0736 mol of methyllithium were added dropwise as a 1.6 M solution in ether. Stirring of the red solution was continued for three hours.

After gas evolution had ceased, the solvents were evaporated at 40°C, leaving a finely powdered yellow-orange product after about 2 hours.

### c. Reaction of the metal salt with the lithiated ligand

The yellow-orange powder was mixed with 8.57 g of ZrCl₄ powder. Evidence of a slight reaction could be a slight change of the color towards red.

300 ml of pentane were then added as reaction medium, and the resulting suspension was stirred overnight at room temperature (23°C), under atmospheric pressure.

The supernatant solution was then removed, and the red powder was washed with pentane and dried. The ¹³C-NMR spectrum of the red powder was substantially identical to that of the same metallocene when prepared using methylene chloride at low temperature (see comparative example).

This process yielded 17.49 g of red powder, corresponding to 100 % yield (calculated values = 15.93 g metallocene + 1.56 g LiCl). Figure 1 shows the ¹³C-NMR spectrum of that powder. The spectrum is identical to that of the same compound obtained by using methylene chloride as reaction medium (Figure 2), except for small peaks which correspond to isopropenyl cyclopentadienyl fluorenyl zirconium dichloride wherein one or two chloride atoms are replaced by CH₃ groups; such metallocenes are as active as the dichloride catalyst for the polymerization of olefins.

### d. Polymerization of propylene

2 mg of the mixture obtained hereabove (containing 1.82 mg of metallocene and 0.18 mg LiCl) was dissolved in 2.5 ml of a 10 wt % solution of methylalumoxane in toluene, giving a bright violet solution. A 250 ml autoclave vessel was filled with 100 ml liquid propylene and thermostated at 20°C while agitating. The catalyst solution was injected through a septum in a valve void on top of the 250 ml vessel and flushed into the 250 ml vessel with 100 ml liquid propylene.

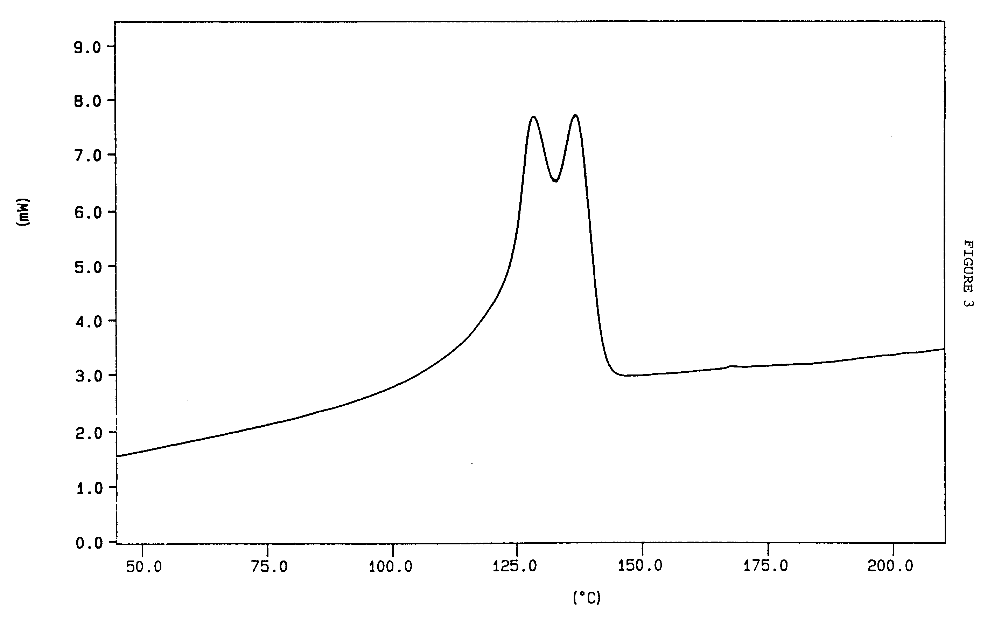

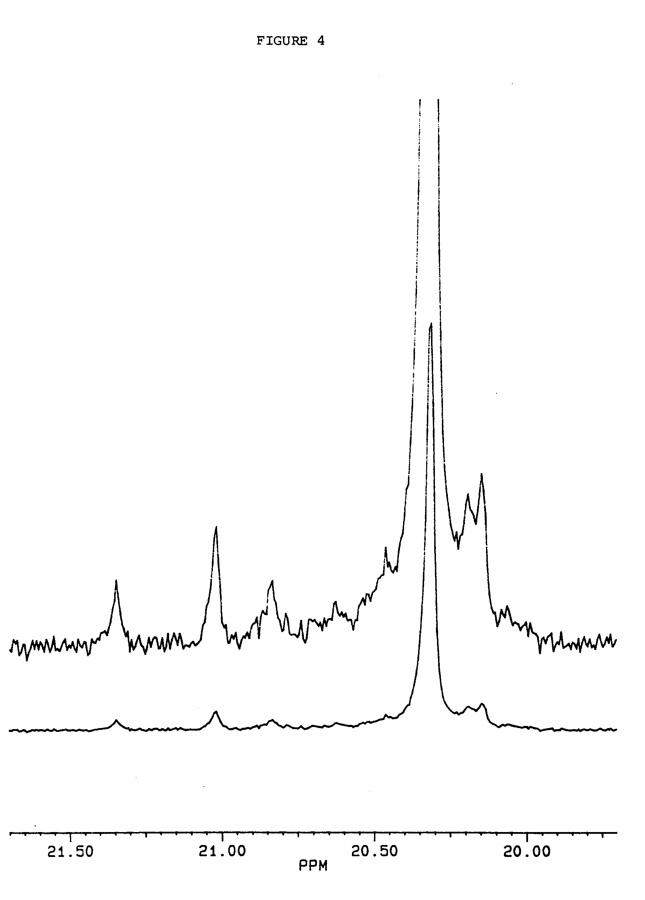

After 3 minutes, the interconnecting valve between the two reactors was opened and the content of the vessel was flushed with 0.9 litre propylene into the 4.5 litre autoclave previously filled with another 0.9 litre of liquid propylene. The whole was left polymerizing for 1 hour keeping the temperature constant at 60°C, after which reaction was stopped by venting off unreacted monomer and the reactor was opened to air. The fluff was dried under reduced pressure at 50°C overnight. 173 g of a nice free flowing powder of spherical particles of syndiotactic polypropylene were obtained. The bulk density was measured according to ASTM-D-1898 and the melt flow index according to ASTM-D-1238(5 kg/190°C). Differential scanning colorimetry was used to determine the melting points (see Figure 3) and heat of crystallization of the polymer. ¹³C-NMR was used to determine the tacticity of the polypropylene (Figure 4): referring to the description of European Patent Application n°89870079.4, few mistakes were observed, among which meso triads were predominant over meso dyads. The results are indicated in Tables 1 and 2.

**Table 1**

| Syndiotactic polypropylene | | | |
|---|---|---|---|
| | units | example | comparative example |
| yield | g | 173 | 185 |
| calculated | g/g catalyst | 96100 | 89800 |
| bulk density | g/cm³ | 0.14 | 0.16 |
| melt index | g/10 min | 12.6 | 12.6 |
| melting points | °C | 128.4 | 128 |
| | °C | 136.8 | 137 |
| heat of crystallization | J/g | -32.98 | -37 |
| tacticity | rrrr | 80% | 79.5% |
| | r | 92% | 93.3% |

**Table 2**

| ¹³C-NMR of syndiotactic polypropylene | | | |
|---|---|---|---|
| Sequence | Shift | Surface | % |
| mmmm | 21.71 | 0.00 | 0.00 |
| mmmr | 21.46 | 0.00 | 0.00 |
| rmmr | 21.27 | 4.65 | 2.30 |
| mmrr | 20.95 | 7.35 | 3.63 |
| rmrr + mrmm | 20.77 | 6.03 | 2.98 |
| mrmr | 20.60 | 6.61 | 3.27 |
| rrrr | 20.25 | 161.58 | 79.85 |
| mrrr | 20.10 | 13.14 | 6.49 |
| mrrm | 19.95 | 3.00 | 1.48 |

### Comparative example

### a. Preparation of a ligand

2,2-isopropenyl fluorene cyclopentadiene was prepared according to the procedure described in the example.

### b. Reaction of the ligand with the alkyllithium

The procedure of the example was followed.

### c. Reaction of the metal salt with the lithiated ligand

0.025 mol of the ligand dilithium derivative was dissolved in 125 ml of cold methylene chloride at -78°C.

A slurry of 0.025 mol of ZrCl₄ in 125 ml of cold methylene chloride was poured in the flask containing the lithiated ligand solution. The mixture was stirred during two hours at -78°C, allowed to warm slowly to room temperature (23°C) and stirred for a additional 12 hours.

Insoluble white LiCl was filtered off before crystallizing a red powder by cooling the red solution to -20°C for 12 hours.

After decantation, the red crystalline powder was washed several times methylene chloride at -20°C and isolated by removing the solvent under vacuum. This process yielded 4.1 grams (0.0095 mol) of metallocene, i.e. a yield of about 38 %.

### d. Polymerization of propylene

Under the same conditions as in example 1, except that 2.06 mg of catalyst were used and that the propylene pressure was of 2.76 MPa, syndiotactic polypropylene was obtained with yield and properties substantially identical to those of example 1 (Table 1).

### Example 2

### a. Preparation of the ligand

2,2-isopropenyl fluorene cyclopentadiene was prepared according to the procedure of example 1.

### b. Reaction of the ligand with the alkyllithium

The procedure of example 1 was followed.

### C. Reaction of the metal salt with the lithiated lignad

The yellow-orange lithiated ligand powder was mixed at room temperature with a 10 wt % solution of an equimolar amount of TiCl₄ in pentane.

The mixture was stirred for one hour, still at room temperature, filtered and washed with pentane to recover a brown powder containing LiCl and 2,2-isopropenyl fluorenyl cyclopentadienyl titatium dichloride and a small amount of LiCl.

## Claims

1. Process for the preparation of metallocenes, comprising the steps of
(i) reacting in a non-polar hydrocarbon liquid at a temperature from -20°C to +100°C (a) a transition metal salt and (b) powder of the solid reaction product of the ligand with an alkyllithium; and
(ii) recovering a solid mixture of lithium salt and metallocene.

2. Process according to claim 1, wherein step (i) is carried out at a temperature from 0°C to 60°C.

3. Process according to claim 2, wherein step (i) is carried out at a temperature of about 25°C.

4. Process according to any one of the preceding claims, wherein the non-polar hydrocarbon liquid is an alkane having 3 to 12 carbon atoms.

5. Process according to claim 4, wherein the non-polar hydrocarbon liquid is an alkane having 4 to 6 carbon atoms.

6. Process according to claim 5, wherein the non-polar hydrocarbon liquid is pentane.

7. Process according to any one of the preceding claims, wherein the transition metal is selected from groups 4, 5 and 6.

8. Process according to claim 7, wherein the transition metal is selected from the group consisting of Ti, Zr, Hf, V and Cr.

9. Process according to any one of the preceding claims, wherein the transition metal salt is a halide.

10. Process according to any one of the preceding claims, wherein the ligand is selected from the group consisting of cyclopentadiene, substituted cyclopentadienes, and bridged dicyclopentadienes wherein each cyclopentadiene may be equal or different and may be substituted or not.

## Patentansprüche

1. Verfahren zur Herstellung von Metallocenen, das die Schritte umfaßt:
(i) Umsetzen in einer nicht-polaren Kohlenwasserstoff-Flüssigkeit bei einer Temperatur von -20°C bis +100°C von (a) einem Übergangsmetallsalz and (b) einem Pulver des festen Reaktionsproduktes des Liganden mit einem Alkyllithium; und
(ii) Gewinnen eines festen Gemisches von Lithiumssalz und Metallocen.

2. Verfahren nach Anspruch 1, wobei Schritt (i) bei einer Temperatur von 0°C bis 60°C durchgeführt wird.

3. Verfahren nach Anspruch 2, wobei Schritt (i) bei einer Temperatur von etwa 25°C durchgeführt wird.

4. Verfahren nach einem der vorstehenden Ansprüche, wobei die nicht-polare Kohlenwasserstoff-Flüssigkeit ein Alkan mit 3 bis 12 Kohlenstoffatomen ist.

5. Verfahren nach Anspruch 4, wobei die nicht-polare Kohlenwasserstoff-Flüssigkeit ein Alkan mit 4 bis 6 Kohlenstoffatomen ist.

6. Verfahren nach Anspruch 5, wobei die nicht-polare Kohlenwasserstoff-Flüssigkeit Pentan ist.

7. Verfahren nach einem der vorstehenden Ansprüche, wobei das Übergangsmetall aus den Gruppen 4, 5 und 6 ausgewählt wird.

8. Verfahren nach Anspruch 7, wobei das Übergangsmetall aus der Gruppe ausgewählt wird, die aus Ti, Zr, Hf, V und Cr besteht.

9. Verfahren nach einem der vorstehenden Ansprüche, wobei das Übergangsmetallsalz ein Halogenid ist.

10. Verfahren nach einem der vorstehenden Ansprüche, wobei der Ligand aus der Gruppe ausgewählt wird, die aus Cyclopentadien, substituierten Cyclopentadienen und verbrückten Dicyclopentadienen besteht, wobei jedes Cyclopentadien gleich oder verschieden sein kann und substituiert oder unsubstituiert sein kann.

## Revendications

1. Procédé de préparation de métallocènes, comprenant les étapes
(i) de réaction dans un liquide hydrocarboné non polaire à une température allant de -20°C à +100°C
(a) d'un sel de métal de transition et
(b) d'une poudre provenant du produit solide de la réaction du ligand avec un alkyllithium; et
(ii) de récupération d'un mélange solide de sel de lithium et de métallocène.

2. Procédé selon la revendication 1, dans lequel l'étape (i) est effectuée à une température de 0°C à 60°C.

3. Procédé selon la revendication 2, dans lequel l'étape (i) est effectuée à une température d'environ 25°C.

4. Procédé selon l'une quelconque des revendications précédentes, dans lequel le liquide hydrocarboné non polaire est un alcane ayant de 3 à 12 atomes de carbone.

5. Procédé selon la revendication 4, dans lequel le liquide hydrocarboné non polaire est un alcane ayant de 4 à 6 atomes de carbone.

6. Procédé selon la revendication 5, dans lequel le liquide hydrocarboné non polaire est le pentane.

7. Procédé selon l'une quelconque des revendications précédentes, dans lequel le métal de transition est choisi parmi les groupes 4, 5 et 6.

8. Procédé selon la revendication 7, dans lequel le métal de transition est choisi parmi le groupe constitué du Ti, Zr, Hf, V et Cr.

9. Procédé selon l'une quelconque des revendications précédentes, dans lequel le sel de métal de transition est un halide.

10. Procédé selon l'une quelconque des revendications précédentes, dans lequel le ligand est choisi parmi le groupe constitué du cyclopentadiène, des cyclopentadiènes substitués, et des dicyclopentadiènes pontés, dans lequel chaque cyclopentadiène peut être identique ou différent et peut être substitué ou non.
